# EUROPEAN PATENT APPLICATION

(11) **EP 4 020 430 A1**
(43) Date of publication of application: **29.06.2022**
(21) Application number: 20216560.1
(22) Date of filing: 22.12.2020
(51) Int. Cl.: G08G 3/00, H04L 29/08, H04W 4/40, H04W 4/44, H04W 4/021, H04W 4/02, H04W 4/029, G01C 21/34, G05D 1/02

(54) **METHOD AND SYSTEM FOR MONITORING TUGS**

(71) Applicant: Navisense GmbH, 22081 Hamburg (DE)
(72) Inventor: Bullemer, Carsten Anton Willy, 22081 Hamburg (DE); Lehmann, Marc, 20097 Hamburg (DE)
(74) Representative: Seemann & Partner Patentanwälte mbB

(57) **Abstract**

The present invention concerns a method and a system for monitoring tugs (10), in particular in tide-influenced waters.

The inventive method comprises
a) over a period of time, monitoring tugs (10) by continuously acquiring (S200) and consolidating (S202) AIS data of one or more tugs (10) and other vessels (20) inside a prescribed, in particular tide-influenced, nautical area;
b) based on the acquired and consolidated AIS data, automatically determining (S204) changes in status of the one or more tugs (10), possible status including "moving" (104), "resting" (102) and "engaged" (106);
c) performing a status-based analysis (S206) of the movements of the one or more tugs (10), wherein parameters of the tugs' (10) movement behavior are analyzed as function of the different status (102, 104, 106); and
d) based on the status-based analysis (S206), providing feedback (S208) to the one or more tugs (10) or their owners to optimize tug operations.

## Description

The invention concerns a method and a system for monitoring tugs, in particular in tide-influenced waters.

The monitoring of maritime vessels by means of acquiring and analyzing their AIS ("Automatic Identification System") data is performed on a regular basis by shipping companies and external providers. The AIS data are broadcast by maritime vessels on a regular basis and provide information about, a.o., the vessel's current position, course and speed. For long-distance seafaring vessels, these data are analyzed with respect to a number of aspects, such as, e.g., fuel consumption, arrival scheduling etc.

An example for this type of monitoring and analysis is disclosed in US 10,293,899 B2. Although it is performed on board, it could be performed remotely using AIS data. An acquisition unit acquires weather and marine data indicating a ship voyage schedule that serves as a reference, actual performance data, fuel consumption data, and weather and marine conditions the ship has encountered during a voyage. The difference between the time indicated by the reference data and the time indicated by the actual performance data for each of the journeys between ports is calculated. A fuel consumption is projected for each of the journeys between ports based on the reference data, weather and marine data and fuel consumption data, and the difference between the projected fuel consumption and the actual fuel consumption amount indicated by the actual performance data for each of the journeys between ports is calculated. The difference may be accounted for by weather conditions or by unforeseen delays in port handling which have to be made up by increased speed in subsequent legs of the ship's itinerary.

The methods developed for long-distance seafaring vessels cannot be applied straightforwardly to tugboats, or tugs for short, for several reasons. Tugs are working vessels that are often called on a need basis and usually do not have fixed medium- to long-term itineraries. Their routes include stretches of transiting towards or from a tug job as well as stretches of tugging. Fuel consumption during tugging is high and fuel has to be expended as needed. This makes it difficult to analyze fuel efficiency in tugs.

The monitoring of tugs as such, namely their current position, course and speed, is insufficient to provide a meaningful basis for a tug performance evaluation and optimization. It is therefore an object of the present invention to provide a method and a system for monitoring tugs that provide for a more realistic evaluation of tug performance and for an improved decision basis for tug dispatch.

This object is achieved by a method for monitoring tugs, in particular in tide-influenced waters, comprising the steps of
a) over a period of time, monitoring tugs by continuously acquiring and consolidating AIS data of one or more tugs and other vessels inside a prescribed, in particular tide-influenced, nautical area;
b) based on the acquired and consolidated AIS data, automatically determining changes in status of the one or more tugs, possible status including "moving", "resting" and "engaged";
c) performing a status-based analysis of the movements of the one or more tugs, wherein parameters of the tugs' movement behavior are analyzed as function of the different status; and
d) based on the status-based analysis, providing feedback to the one or more tugs or their owners to optimize tug operations.

The operational profile of tugs are complicated by the multitude of tug jobs requiring full power and the journeys in between engagements. Day-to-day operation of the tugs can vary widely, making informed analyses difficult. The inventive method rests on the basic concept that instead of monitoring and analyzing the operation of tugs in a general manner, an automated identification of status of the operation of tugs is provided and the tug's operation is analyzed in a status-specific manner.

The nautical area in which the monitoring takes place may be limited to the operating area of the monitored tug or tugs, such as a harbor, a stretch of coastal waters or the like. The monitored area may be a tidal water, meaning that it experiences tidal flows of its body of water.

Basic status for tugs defined according to the inventive method may be "resting", "moving" and "engaged". Within the present disclosure, a "resting" tug is motionless and not in current engagement with another vessel that is being tugged. The rest may occur at its anchoring berth, during loading from a bunker barge or somewhere on the water in between tug jobs.

The "move" status applies when the tug is moving towards an engagement with a vessel to be tugged, or when moving away from the vessel after the tugging has been completed. The "engaged" tug is engaged with a vessel to be tugged or being tugged. When engaged, the tug will stay in close proximity to the tugged vessel.

It is understood by the skilled person, that these terms are simply descriptors of different status of a tug and other terms may be used without falling out of the scope of protection, such as "at rest", "in motion", "in engagement", "tugging", "transiting", "mooring" etc., even abstract denominators such as "status 1", "status 2", "status 3", as long as they are consistently used for the status of tug at rest, moving tug and engaged tug as described herein.

Tugboat captains are sometimes required to record the time of engagement and disengagement with and from tugged vessels. However, the records may not always be complete or precise. This is why the changes in status are determined automatically according to the inventive method. This can be accomplished using the AIS data of the tug or tugs, including their time-resolved positions, courses and speeds, and comparing them with the time-resolved positions, courses and speeds of other vessels inside the nautical area under observation. This may take place in real time or retrospectively with time-stamped data stored in a database. The latter case of an offline analysis has the benefit that the observed tug jobs are already completed, providing for more certainty in the assignment of status to the tug or tugs.

An additional status of tugs may include "waiting". This status can be used when a tug is at rest within the maximum engagement distance to a vessel that is at rest, too, either for the first time, or after a period of concerted movement of the tug and the vessel. The waiting period may be ended either by both tug and tugged vessel moving in synchronicity again marking the tugging of the vessel by the tug, or by the tug disconnecting from the vessel and leaving the vessel behind by a distance that is greater than the maximum engagement distance. The "waiting" status provides an opportunity to differentiate between "engaged" and "waiting" when in close proximity to a vessel to be tugged, and between "waiting" and "resting" for stationary periods with our without close proximity to a vessel.

Possible events of tug-vessel synchronicity are not restricted to tug jobs, but may furthermore include periods of being attached to a bunker barge for reloading, or of engaging with the pilot vessel. Such events may be assigned their own separate status. In embodiments, therefore, the status of tugs includes "loading" or "bunker barge docking" and "pilot on board", of which one of "loading" and "bunker barge docking" may be used for the status in which the tug is in contact with a bunker barge. These status can be found by detecting prolonged proximity of the tug with a bunker barge or with a pilot vessel. This concept can be extended to vessels other than tugboats, since other vessels may also be visited by a pilot or being loaded from a bunker barge or other supply vessel.

In embodiments, the determination of status and/or status changes of the one or more tugs is accomplished by means of a state machine programmed to identify said status and/or status changes of tugs. A state machine, also called "finite-state machine" is a computational model that can be implemented as a logical programming unit, that is, function, subroutine or program within the analysis code and may be in exactly one of a finite number of states at any given time. The states of the state machine correspond to the status of the tug of the method according to the present invention. The state machine can transition from one stage to another in response to some input that triggers the transition. In the present case, the input may be the detection of the end of a prolonged period of time in which the tug has been stationary, to mark the transition from "resting" to "moving". Another trigger may be the detection of the entering of the target into a given proximity to a vessel, followed by a period of sustained proximity to that vessel, to mark the transition from "moving" to "engaged". The end of such a period of sustained proximity to a vessel marked by the exceedance of the proximity distance between the target and the vessel may mark the transition from "engaged" to "moving". Furthermore, the end of a period of movement marked by the assumption of the static position marks the transition from the state of "moving" to "resting".

Inside the prescribed nautical area, the tug position or positions are compared in embodiments to vessel positions, and engagement is found upon continuous proximity of a tug and a vessel over a period of time, wherein in particular in addition no other tug is engaged with the respective vessel, the respective vessel is not at rest and/or the respective vessel is not pausing in broadcasting AIS data. These are some criteria for identifying engagement of tugs to vessels. In some cases, two or more tugs may be assigned to one vessel. In that case, the criterion that no other tug is engaged with the respective vessel may be relaxed or rescinded. This may be accomplished by applying an above-described state machine on all of the combinations of tugs and vessels within the prescribed nautical area, or by finding candidates of tug jobs by filtering out events of proximity between tugs and vessels and then applying the state machine to such tug job candidates.

Tug jobs may be identified in embodiments from one or more successive events of engagement and disengagement of a single tug with one vessel or, respectively, multiple vessels in succession. The identification of completed tug jobs is useful for the analysis of efficiency over the course of the job. The analysis of the operation of the tug across a tug job, or a plurality of tug jobs, may find regular patterns in which the operation of the tugboat may differ during transit towards the vessel to be tugged and transit back from the vessel after disengagement from the vessel. Certain tugboats may be operated such that some tugboats are piloted above or below fuel efficiency speed on the transit towards the vessel, while others may be piloted above or below fuel efficiency speed on the transit back, or on both legs of the tug job.

Some complications may arise from the real movements and rests of the tugboat. For example, a tag that arrives at the vessel to be target may come to a stop or a virtual stop before engaging and taking the vessel under tug. The state machine can be chosen such that such an intermediate rest period may be given the status of "resting" or alternatively "engaged". During the tagging, the tug and vessel may come to a stop as well. However, since they remain in proximity and movement is resumed after a while, the status should not be changed and remain "engaged".

Similar state machine functionalities may be employed for the analysis of the movements of other vessels within the prescribed nautical area. For a seafaring vessel, possible states or status may be "sailing" when at sea, "resting", which is self-explanatory, and "moving" when within range of a harbor or the resting area of a harbor, which is visited before entering the harbor proper. The definitions of the status "sailing" and "moving" may also be chosen such that "sailing" means sitting under own power, whereas "moving" designates that the vessel is being tugged, that is moving under external power of tugboats.

In embodiments, movements of the one or more tugs are analyzed for periods of time in which the one or more tugs are in transit to or from engagement with other vessels, wherein in particular in tide-influenced waters the speed over water is analyzed with respect to fuel consumption in order to determine whether the one or more tugs are operated in accordance with the need of fuel efficiency. This transiting of tugs to and from jobs is covered by the status "moving" and therefore can be analyzed apart from the other periods of operation, such as "resting" and "engaged". In particular in tide-influenced waters, the fuel consumption depends not so much on the ground speed as on the speed of the top over water, that is, relative to the water, which itself may be streaming in or out according to the present tide. The consumption of fuel and thereby fuel efficiency may be estimated by means of the speed over water and/or by means of the rate of turn, that is, the rate of turn of the ship's propeller, to which the fuel consumption is proportional, with generally known factors or functions of linear or nonlinear proportionality.

In standard tugboats, the most fuel-efficient speed of movement, when not engaged with the vessel, is around 7 to 10 kn. As a result of the analysis of fuel efficiency during operation under the status "moving" over a longer period of time it may turn out that certain tug captains may be prone to depart late from their berthing positions and use fuel-inefficient high-speed to meet the vessel to be tugged. Such tug captains may be given orders for more timely departures and itineraries reflecting this. A further cause for such inefficiencies may be in inefficient dispatching of the tugboats, especially in case of a fleet of tugboats that have to be coordinated for most efficient tug job completion.

In embodiments, a monitoring based job dispatch routine is implemented for a specific tug or a fleet of tugs, wherein one or more future tug jobs for one or more vessels to be tugged are input and optimized transit parameters for the tug or one or more of the fleet of tugs are given as output, in particular based on current and/or predicted tidal velocities, wherein the transit parameters include a time of departure from current position, a transit speed over water or over ground, an engagement position with the vessel and a time of arrival at the engagement position. In particular, the monitoring based job dispatch routine takes into account the positions and status of a plurality of tugs of a tug fleet for providing a fleet-optimized tug dispatch in some embodiments. With the knowledge of the tidal velocities and the current locations of the various tugs of the tugboat fleet as well as the positions of the vessels to be tugged, it is possible to optimize the dispatch of the tugboats. For example, a tugboat located upstream of a vessel to be tugged may expend less fuel than a tugboat located downstream of the vessel in order to reach the vessel, even if it is located further away from the vessel than the tugboat downstream of the vessel.

In the course of consolidation, the AIS data may be sanitized, the sanitizing encompassing decoding, reordering and/or filtering the data and/or removing duplicates. The sanitizing of the AIS data serves to provide a clean basis for the monitoring of the tug or tugs. The object of the present invention is also solved by a system for monitoring tugs, in particular in tide-influenced waters, comprising an AIS data receiving unit and a computing system comprising or connected with the AIS data receiving unit and further comprising an analyzing unit, the computing system being configured and programmed to carry out a method according to the present invention as described within the present disclosure. The system according to the present invention thereby embodies the same inventive features, advantages, properties and concepts as the method of the present invention.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: an example of a tug job involving a tug and a vessel,
- Fig. 2: a second example of a tug job involving a tug and a vessel,
- Fig. 3: a third example of a tug job involving a tug and a vessel,
- Fig. 4: a schematic of a system according to the present invention,
- Fig. 5: a schematic representation of an embodiment of a state machine according to the present invention,
- Fig. 6: a schematic representation of an embodiment of a method for monitoring tugs according to the present invention and
- Fig. 7: a schematic representation of a tug job detector based on the inventive method.

In the drawings, the same or similar types of elements or respectively corresponding parts are provided with the same reference numbers in order to prevent the item from needing to be reintroduced.

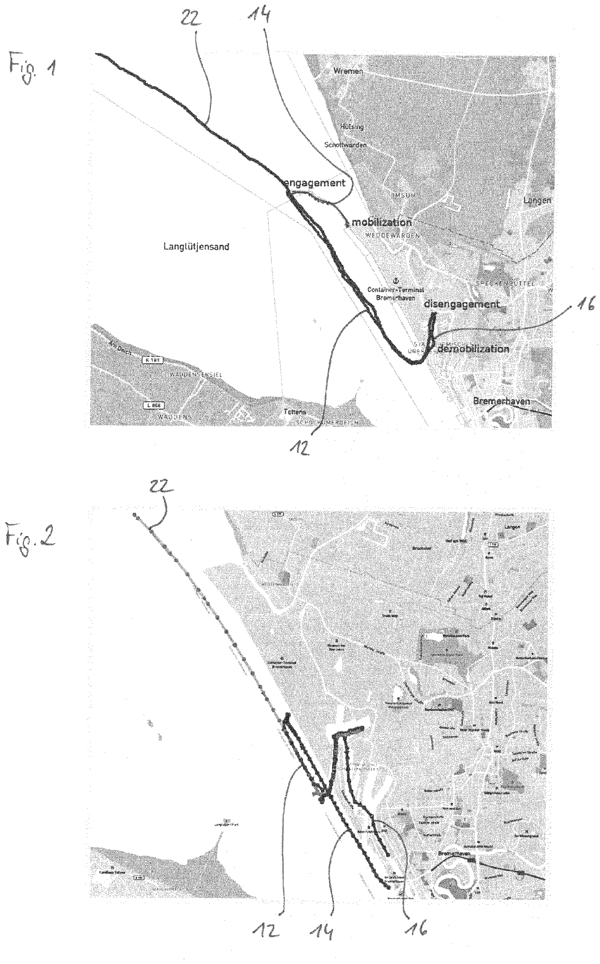

Fig. 1 shows an example of a tug job involving a tugboat 10 and a vessel 20 coming in southbound from the North Sea into Bremerhaven harbor, located at the estuary of Weser river where it opens into the North Sea. The vessel's course 22 is met by the tug's course 12, which has a short mobilization leg 14 prior to engagement, in which the tugboat moves from its resting position in a berth area in the northern most corner of the Container-Terminal Bremerhaven where it was laying in wait for inbound vessels. Shortly north of the original resting position, the tugboat meets and engages with the vessel, tugging it southward toward its berth inside the turning basin of the container terminal. During engagement, the tugboat is tugging the vessel and therefore stays in close proximity to the tugged vessel. Course corrections will cause the tug's course 12 and the vessel's course 22 to diverge slightly, but not more than the length of the tug rope between the tugboat and the vessel. After reaching the vessel's berth, the tugboat disengages from the vessel and demobilizes, retreating towards its own resting berth. The tug job is completed.

Fig. 2 shows a second example of a tug job involving a tug and a vessel, again at Bremerhaven harbor. In this case, the tugboat had been at rest at the "Schlepperpier" (tugboat pier) in the southern portion of the harbor next to the Bremerhaven rear light. From its resting berth, the tugboat mobilizes on its mobilization course 14 in order to meet and vessel on its inbound course 22. It engages with the vessel north of the entrance to the inner part of the container terminal and tugs the vessel along the course 12 into the turning basin of the harbor. After reaching the vessel's berth, the tugboat disengages and demobilizes along the course 16, completing the tug job.

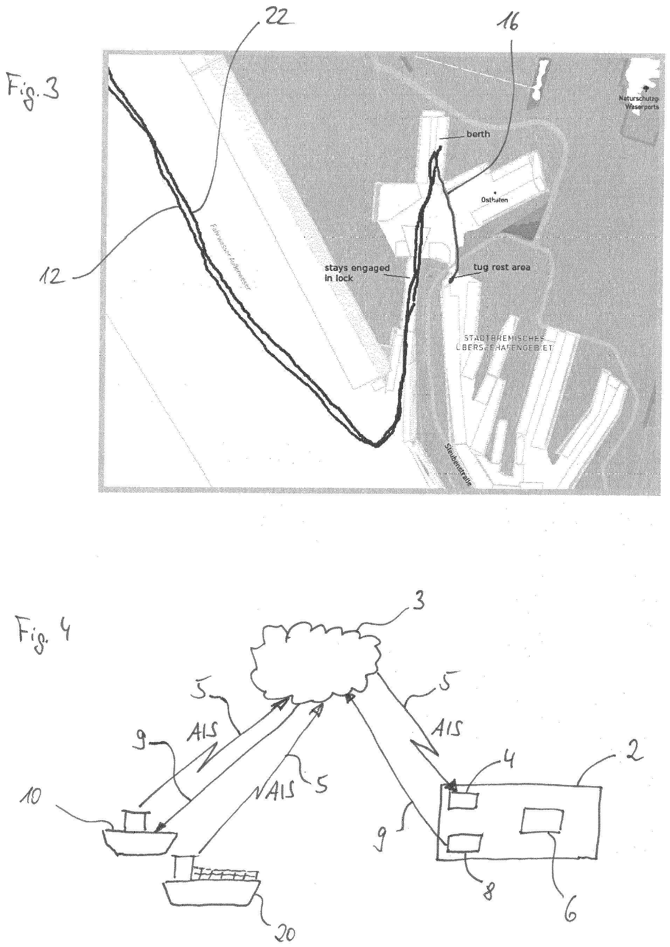

Fig. 3 shows in greater detail the area around the turning basin of the East harbor, along with the courses 12 and 22 of the tugboat and a vessel being tugged by the tugboat. The target tags the vessel until it reaches its berth in the northern arm of the turning basin, all the while staying engaged in lock, meaning that the coordinates of the tugboat and the vessel do not deviate from each other by more than a certain distance indicating engagement. After the vessel has reached its berth, the boat disengages and moves on course 16 to a tug rest area. The tug job is completed.

Fig. 4 displays a schematic of a system 2 according to the present invention. In this embodiment, the system 2 itself comprises an AIS data receiving unit 4 which is capable of receiving AIS data coming in with AIS data transmissions 5 originating from tugboats 10 and vessels 20 through a network 3 over one or more channels, e.g., via radio transmission or satellite transmission. The AIS data receiving unit 4 may also be a computer or reside as software code in a computer that is connected to the internet and acquires the AIS data from there, e.g., by tapping a service that provides real time and/or historical AIS data.

The system 2 furthermore comprises a computing system 6 with an analyzing unit and a transmitting unit 8. Both units may be implemented as software components running on the same or different computers, e.g., on one or more servers. The analyzing unit is designed to perform the analysis of the AIS data including the determination of the tug status and tug status changes and the tug status based analysis of the tug movements, such as the determination of fuel consumptions when moving towards or from an engagement with another vessel. The analyzing unit may also be fed with tidal data such as time-resolved velocities of the tidal waters in estuarial zones. With these, the analyzing unit can compute the speed-over-water of the tugboats and make an improved determination of fuel consumption.

The analyzing unit may also be fed requests of tug jobs which may be submitted prior to a vessel to be tugged entering the operating zone of the tugs in or around a harbor. The requests may then be processed by analyzing a current and a projected future tug job situation of an individual tug or of a fleet of tugs. In the former case, the tug schedule may be altered in order to optimize tug job efficiency over a series of engagements. In the latter case, a tug may be chosen to be dispatched to meet the vessel which will be ideally situated with respect to the incoming vessel requesting to be tugged without having a parallel tug job interfering with the newly requested one.

The results of such analyses are transmitted by data transmission 9 either to the tugs themselves or to an owner or dispatcher of the tug or a fleet of tugs and may be used to improve the efficiency, in particular fuel and/or tug job efficiency, of individual tugs or of a fleet of tugs overall.

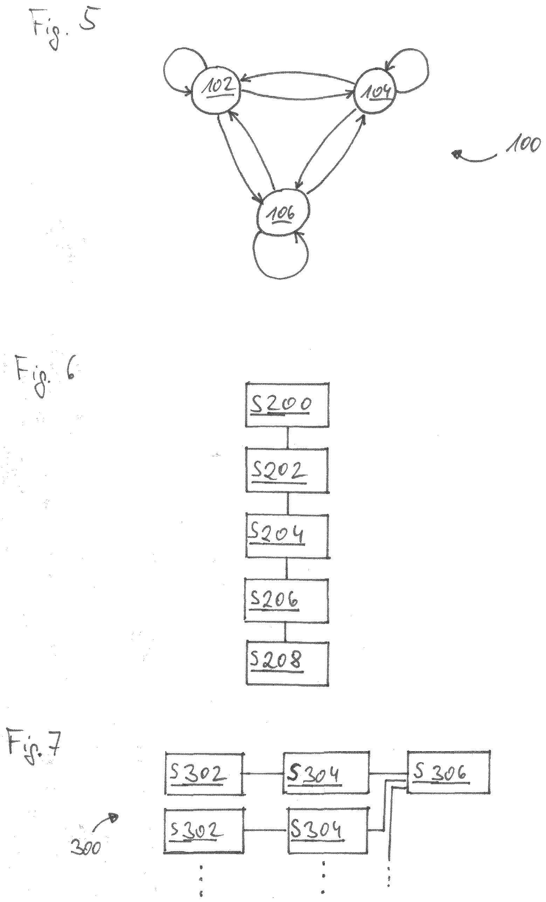

Since the analysis of the movements of tugs 10 is done in recognition of the status of the tug, which may be resting, moving or engaged with a tugged vessel 20, the current invention rests on an automated recognition of the tug's 10 status and any change thereof. One tool that can be used to do this, and which is employed in embodiments of the invention, is a state machine 100, schematically represented in Fig. 5. In its most basic version, the tug state machine 100 has three states, namely the status "resting" 102, "moving" 104 and "engaged" 106. More status, such as "bunker barge docking" or "pilot on board" may be added, as needed for the subsequent analysis of the tugs or tugs' movements.

Changes between the status 102, 104, 106 are depicted as arrows. With each arrival of an AIS datum of a tug 10, an analysis is done. If, for example, a tug 10 is currently in status "resting", it is neither moving nor currently engaged. If the following AIS datum shows no movement, the status remains "resting", as illustrated by the circular arrow going from status 102 to status 102. The same holds for the other two status 104 and 106, if a subsequent AIS datum does not indicate that a change in status is warranted.

A change from "resting" 102 to "moving" 104 may be effected if the AIS data show that the tugboat has left its resting position and is moving at a speed that is higher than a predefined minimum speed. Likewise, a change from "moving" 104 to "resting" may be effected when the AIS position data of the tugboat 10 indicated that it has slowed down below the predefined minimum speed and is essentially motionless. This status transition may require an additional qualifier such as proximity of the tugboat to a known resting area or resting position. A minimum speed may be needed since the AIS position data are based on GPS, Glonass or a similar system and may exhibit some jitter, which may otherwise be falsely identified as movement.

The changes between the status "resting" 102 and "moving" 104 furthermore assume that the tugboat 10 is not currently engaged. This may be checked by scanning the AIS data for nearby other vessels and, if such other vessels are found in close proximity, a lack of positional correlation of their AIS position data with the tug's AIS position data over a predetermined period of time.

A change of status to "engaged" 106 will usually occur out of the status "moving" 104, but may occasionally also occur from status "resting" 102. The monitoring of such a status change involves the scanning of the AIS data of other vessels 20 for proximity to the monitored tug 10. A predictive version of the method may identify candidates for engagement by finding converging courses of the tug 10 and a vessel 20, which may or may not lead to an engagement. However, vessels 20 whose courses do not converge with the tug's course 10 may be discarded from the engagement candidate list. Furthermore, vessels 20 that are currently being shown as in lock or engaged with other tugboats 10 may be discarded from the engagement candidate list as well, unless the vessel 20 requires more tugboats for tugging than are currently engaged with the vessel 20.

Once an engagement candidate vessel 20 is identified, a number of criteria may be used alternatively or cumulatively to determine that a status change to "engaged" 106 is warranted. This includes that the distance of the tug 10 to the vessel 20 falls below a predetermined maximum engagement distance, *e.g.,* 150 m, that both the tug 10 and the vessel 20 are regularly sending out AIS data signals, *e.g.,* that the time distance between subsequent AIS data signals is 10 minutes or less, that the vessel's speed is greater than a minimum speed of, *e.g.,* 0,1 kn. Once all those criteria are met, the tug status may change to "engaged" 106. In an offline analysis with historical AIS data, the change of the tug status to "engaged" 106 may be to the additional subject, that subsequent, meaning later, AIS data show that the tugboat 10 and the vessel 20 are in lock, meaning that their distance stays within the maximum engagement distance. The vessel 20 may be given the status "engaged" 106 or "in lock" as well.

The difference between "engaged" and "in lock" in the context of the presently described inventive method is that "engaged" 106 is a status of the state machine 100, whereas "in lock" is an observation on the basis of the AIS data. These concepts can be carried out in reality using different words or designations.

Once the tug status in the state machine 100 is set to "engaged" 106, a status change can be effected towards "resting" 102 and "moving" 104. Since it is usually the tugboat 10 that moves away from the tugged vessel 20 after having reached the vessel's 20 berth or anchoring position, where the vessel 20 comes to rest, the most common change of the tug's status from "engaged" 106 will be towards "moving" 104. The criteria in this case are usually simpler than in the opposite case. The exceeding of the maximum engagement distance usually suffices. An alternative pinpointing of the exact time of disengagement may be accomplished by finding the time stamp of the AIS position data of the vessel 20 where the vessel 20 has come to rest, or by taking the halfway point between the time the vessel 20 has come to a rest and the time the tugboat 10 has exceeded the maximum engagement distance.

The actual course of a tugboat 10 may involve unmoving periods while engaged. In those periods the status remains "engaged" 106, if the following movements of the tugboat 10 are still "in lock" with the engaged vessel 20. Furthermore, a tugboat may have more than one engagement in the course of a deployment, with moving and resting periods in between.

Fig. 6 is a schematic representation of an embodiment of a method for monitoring tugs according to the present invention. This representation shows a general outlay of the method, which can be implemented with a variety of options. In step S200, AIS data from one or more tugs and vessels are acquired. This may be done by directly observing a certain nautical area such as an estuary leading towards a harbor, or by filtering historical AIS data for the nautical area and for their source as tugs or other vessels.

In step S202, the acquired AIS data are filtered and consolidated. This may include decoding and reordering the AIS data, removing duplicates, and extracting information relevant for the intended subsequent analysis. Such relevant information will include position data, as well as other data, as far as they may be available, such as engine rate turn data, engagement information logged by the tug's captain, course and destination, among others.

From the acquired and consolidated AIS data of the tug or tugs and nearby vessels, the tug status 102, 104, 106 and changes in tug status 102, 104, 106 are determined in step S204, in particular by means of a state machine model such as shown in Fig. 5 and described here above.

Once the tug status is determined, in step S206 an analysis of the tug's movements is carried out, wherein the analysis takes into account the tug's status. For example, the parts of the tug's course in which the tug's status is "moving" 104 may be analyzed for fuel efficiency of its operation. For this purpose, the tug's speed over ground may be put into the context of the velocity of the tidal currents of the nautical area at the same time so that a speed over water is obtained. The rate of turn and the fuel consumption are correlated with the speed over water and the rate of fuel consumption as a function of speed over water is well known for most tugs when the tug is not currently tugging a vessel. Therefore, it is possible to arrive at a good estimate of the actual fuel consumption of the tug during these "moving" periods. The estimated fuel consumption may then be compared to fuel consumption at optimum operational parameters, which may include going at a speed over water of between 7 and 10 kn.

A more involved analysis may concern the periods in which the tug is engaged with a vessel. The analysis of both the tug's course and the tugged vessel's course may reveal patterns of tug movement characteristic of certain tug captains, which those captains may be made aware of to optimize tugging operation in future tug jobs.

Furthermore, a possible analysis may include the acceptance of tug job requests and finding optimized dispatch patterns for the tugs of a tug fleet, or for a single tug having a number of tug jobs one after another.

The results of the analysis are then fed back in step S208 to the tug or to the tug's or tug fleet's owner or dispatcher.

Another aspect of the present invention is the identification of tug jobs, which may consist of a single engagement of the tug with a single vessel or a string of engagements with different vessels without an official resting period in between. Fig. 7 depicts a schematic representation of a tug job detector 300, which may be implemented in the inventive method. During the course of a workday, a tug 10 may encounter multiple vessels 20 with which it engages and which need to be tugged into and out of their berths. During or after tug status determination S204, one or several engagements may be detected in step S302, as well as demobilizations or disengagements S304. The disengagement may be followed either by a movement towards and engagement with another vessel or by movement towards a resting area or berth and a rest there. These one or more successive engagements and disengagements are analyzed in a tug job finalizing step S306 and the tug job is identified as a single engagement or a series of successive engagements, including mobilization and demobilization.

The job detection is slightly more complicated when done in real time, since the tug job may not be completed at the time of the analysis. In this case, a practical way of handling the open-ended tug job is to keep track of engagements, *e.g.,* by storing their start and end times in a cache that will be kept for a certain period of time which should be chosen long enough for most tug jobs, before being discarded. For each of the engagements, a cross check may be performed to verify that the course of the vessel believed to be tugged by the monitored tugboat does indeed match the respective course of the tugboat.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 2: system
- 3: network
- 4: AIS data receiving unit
- 5: AIS data transmission
- 6: computing system with analyzing unit
- 8: transmitting unit
- 9: transmission of analysis result
- 10: tugboat
- 12: course of tug
- 14: course of tug for mobilization
- 16: course of tug for demobilization
- 20: vessel
- 22: course of vessel
- 100: tug state machine
- 102: status "resting"
- 104: status "moving"
- 106: status "engaged"
- S200: acquiring AIS data
- S202: filtering and consolidating AIS data
- S204: determine tug status
- S206: tug status-based analysis of tug movements
- S208: feedback to tug or owner
- 300: tug job detector
- S302: engagement detected
- S304: demobilization detected
- S306: finalize tug job

## Claims

1. Method for monitoring tugs (10), in particular in tide-influenced waters, comprising the steps of
a) over a period of time, monitoring tugs (10) by continuously acquiring (S200) and consolidating (S202) AIS data of one or more tugs (10) and other vessels (20) inside a prescribed, in particular tide-influenced, nautical area;
b) based on the acquired and consolidated AIS data, automatically determining (S204) changes in status of the one or more tugs (10), possible status including "moving" (104), "resting" (102) and "engaged" (106);
c) performing a status-based analysis (S206) of the movements of the one or more tugs (10), wherein parameters of the tugs' (10) movement behavior are analyzed as function of the different status (102, 104, 106); and
d) based on the status-based analysis (S206), providing feedback (S208) to the one or more tugs (10) or their owners to optimize tug operations.

2. Method according to claim 1, **characterized in that** the status of tugs (10) include one or more of "waiting", "loading" or "bunker barge docking" and "pilot on board".

3. Method according to claim 1 or 2, **characterized in that** the determination of status (102, 104, 106) and/or status changes of the one or more tugs (10) is accomplished by means of a state machine (100) programmed to identify said status (102, 104, 106) and/or status changes of tugs (10).

4. Method according to one of claims 1 to 3, **characterized in that** tug jobs are identified from one or more successive events of engagement and disengagement of a single tug (10) with one vessel (20) or, respectively, multiple vessels (20) in succession.

5. Method according to one of claims 1 to 4, **characterized in that** inside the prescribed nautical area, the tug position or positions are compared to vessel positions, and engagement is found upon continuous proximity of a tug (10) and a vessel (20) over a period of time, wherein, in particular in addition, no other tug (10) is engaged with the respective vessel (20), the respective vessel (20) is not at rest and/or the respective vessel (20) is not pausing in broadcasting AIS data.

6. Method according to one of claims 1 to 5, **characterized in that** movements of the one or more tugs (10) are analyzed for periods of time in which the one or more tugs (10) are in transit to or from engagement with other vessels (20), wherein in particular in tide-influenced waters the speed over water is analyzed with respect to fuel consumption in order to determine whether the one or more tugs (10) are operated in accordance with the need of fuel efficiency.

7. Method according to claim 6, **characterized in that** for a specific tug or a fleet of tugs (10), a monitoring based job dispatch routine is implemented, wherein one or more future tug jobs for one or more vessels (20) to be tugged are input and optimized transit parameters for the tug (10) or one or more of the fleet of tugs (10) are given as output, in particular based on current and/or predicted tidal velocities, wherein the transit parameters include a time of departure from current position, a transit speed over water or over ground, an engagement position with the vessel and a time of arrival at the engagement position.

8. Method according to claim 7, **characterized in that** the monitoring based job dispatch routine takes into account the positions and status of a plurality of tugs (10) of a tug fleet for providing a fleet-optimized tug dispatch.

9. Method according to one of claims 1 to 8, **characterized in that** in the course of consolidation (S202), the AIS data are sanitized, the sanitizing encompassing decoding, reordering and/or filtering the data and/or removing duplicates.

10. System (2) for monitoring tugs (10), in particular in tide-influenced waters, comprising an AIS data receiving unit (4) and a computing system (6) comprising or connected with the AIS data receiving unit (4) and further comprising an analyzing unit, the computing system (6) being configured and programmed to carry out a method according to one of claims 1 to 9.
